Europäisches Patentamt

European Patent Office

Office européen des brevets

(11) Veröffentlichungsnummer: **0 266 601 B1**

(12) **EUROPÄISCHE PATENTSCHRIFT**

(45) Veröffentlichungstag der Patentschrift: **06.05.92**

(21) Anmeldenummer: **87115134.6**

(22) Anmeldetag: **16.10.87**

(51) Int. Cl.⁵: **C01F 5/40**

(54) Verfahren zur Gewinnung von Magnesiumsulfaten.

(30) Priorität: **03.11.86 DE 3637225**

(43) Veröffentlichungstag der Anmeldung:
**11.05.88 Patentblatt 88/19**

(45) Bekanntmachung des Hinweises auf die
Patenterteilung:
**06.05.92 Patentblatt 92/19**

(84) Benannte Vertragsstaaten:
**AT BE CH ES FR GB GR IT LI LU NL SE**

(56) Entgegenhaltungen:
**DE-C- 3 146 295**
**DE-C- 3 334 665**

(73) Patentinhaber: **KALI + SALZ AG**
**Friedrich-Ebert-Strasse 160**
**W-3500 Kassel(DE)**

(72) Erfinder: **Singewald, Arno, Prof. Dr.**
**Michelswiesenweg 1**
**W-3500 Kassel(DE)**
Erfinder: **Neitzel, Ulrich, Dr.**
**Am Donarbrunnen 28**
**W-3500 Kassel(DE)**
Erfinder: **Fricke, Günter, Dr.**
**Akazienweg 18**
**W-6430 Hersfeld(DE)**

**Beschreibung**

Die Erfindung betrifft ein Verfahren zur Gewinnung von Magnesiumsulfaten aus Rohsalzgemischen, insbesondere aus Hartsalzen.

Die klassische Methode der $MgSO_4$-Gewinnung, insbesondere des Minerals Kieserit ($MgSO_4.H_2O$), besteht darin, den Rückstand des Heißlöseprozesses, der sich im wesentlichen aus Steinsalz und Kieserit zusammensetzt, mit kaltem Wasser zu behandeln und das Steinsalz vollkommen aufzulösen ("Ullmanns Encyklopädie der Technischen Chemie", 4. Auflage, Bd. 13, Seite 483). Dabei fielen je Tonne erzeugten Kieserits mindestens 15 $m^3$ Steinsalzlösung an, deren Beseitigung zunehmend Schwierigkeiten machte. Zwar unterscheidet sich die Lösegeschwindigkeit des Kieserits stark von der des NaCl; dennoch gehen beachtliche Mengen $MgSO_4$ in Lösung, so daß, insgesamt gesehen, bei Heiß- une Kaltlöseprozeß nur $MgSO_4$-Ausbeuten von etwa 60 % zu verzeichnen waren.

Da auch andere Bestandteile des Rohsalzes relativ geringe Lösegeschwindigkeit in Wasser besitzen, finden sich Minerale, wie Anhydrit ($CaSO_4$), Polyhalit ($MgSO_4.K_2SO_4. 2CaSO_4.2H_2O$) und Langbeinit ($K_2SO_4.2MgSO_4$) praktisch vollständig beim Kieserit wieder und beeinträchtigen die Verwertbarkeit.

Das wird vor allem dadurch sehr ausgeprägt, daß in zunehmenden Maß auch Rohsalze abgebaut werden müssen, die mäßige Kieseritgehalte und deutliche Anteile der erwähnten Nebenmineralien, daneben auch noch Kainit ($KCl.MgSO_4.2,75 H_2O$), aufweisen.

Unter diesen Bedingungen hat es sich als äußerst schwierig gezeigt, verkaufsfähig Produkte mit hoher $MgSO_4$-Ausbeute zu erzeugen.

Es sind mehrere Verfahren zur elektrostatischen Aufbereitung von Kalirohsalzen, insbesondere Hartsalzen, bekannt, bei denen Magnesiumsulfate als weitgehend reiner Kieserit erhalten werden, wobei jedoch Restmaterialien anfallen, die andere $MgSO_4$-Minerale und Restkieserit in Mengen enthalten, die nicht zu vernachlässigen sind.

Aus Restmaterialien kann der Kieserit auf elektrostatischen Wege bisher nur unter Aufwand relativ großer Mengen von Konditionierungsmitteln als verwertbares Konzentrat gewonnen werden.

So ist zum Beispiel aus der DE-PS 10 78 961 ein Verfahren bekannt, nach dem diese Restmaterialien, die aus der elektrostatischen Gewinnung von Kalikonzentraten stammen, mit 2,4 Dichlorphenoxyessigsäure konditioniert werden. Die im Rahmen dieses Verfahrens einzusetzende Menge an Konditionierungsmitteln ist mit 150 bis 600 g/t Restmaterial beträchtlich; außerdem muß das Trenngut während der Trennung auf einer Temperatur von 120 bis 150 ° C gehalten werden.

Es ist darüber hinaus bei der elektrostatischen Aufbereitung von Rohsalzgemischen bekannt, als Konditionierungsmittel Fettsäuren mit C3 - C18 zu verwenden, und zwar in Mengen von 100 bis 300 Gramm Konditionierungsmittel pro Tonne Kalirohsalz.

Daraus folgt, daß bei dem bisherigen Verfahren zur elektrostatischen Aufbereitung von Kalirohsalzen erhebliche Mengen an Konditionierungsmitteln notwendig sind, um aus den Restmaterialien die darin verbliebenen Wertstoffe zu gewinnen, die sich den vorausgegangenen Reinigungsschritten entzogen haben.

Hinzu kommt, daß die Restmaterialien relativ große Mengen an Konditionierungsmitteln enthalten, wodurch die Weiterverarbeitung dieser Wertstoffe beeinträchtigt ist.

Zwar kann man aus diesen Restmaterialien ebenfalls aufgrund der klassischen Methode anschließend an die Kaliextraktion mit Wasser Kieserit-Rückstände gewinnen und damit die $MgSO_4$-Gesamtausbeute erhöhen, aber es gehen dabei erhebliche $MgSO_4$-Mengen, insbesondere die feinen Anteile, verloren, und es fallen immer noch erhebliche Abwassermengen an.

Der Erfindung liegt die Aufgabe zugrunde, ein Verfahren zur Gewinnung von Magnesiumsulfat unter Vermeidung großer Abwassermengen zu schaffen, bei dem die sonst bei der elektrostatischen Trennung von Rohsalzen anfallenden, an sich nicht verwertbaren magnesiumhaltigen Restmaterialien noch verwertet werden können, ohne viel Konditionierungsmittel aufwenden zu müssen, und daß durch weitere Ausgestaltung des Verfahrens ein Maximum an Magnesiumsulfat aus dem Rohsalz in kontinuierlichem Arbeitsgang gewonnen werden kann.

Nach der Erfindung ist das Verfahren durch folgende Verfahrensschritte gekennzeichnet:

a) Das Rohsalzgemisch wird einer ersten elektrostatischen Behandlung unterworfen, wobei NaCl als Abfall anfällt, worauf das Hauptmaterial weiteren elektrostatischen Trennbehandlungsstufen unterworfen wird, bei denen ein Magnesiumsulfatkonzentrat hoher Reinheit als Kieserit anfällt, worauf das in den einzelnen Stufen anfallende magnesiumsulfathaltige Restmaterial gesammelt wird;

b) das gesammelte magnesiumsulfathaltige Restmaterial wird einer weiteren elektrostatischen Behandlung unter Mitverwendung des aus dem Verfahrensschritt a stammenden Konditionierungsmittels unterworfen, wobei ein magnesiumsulfathaltiges Konzentrat geringerer Reinheit anfällt;

c) das aus dem Verfahrensschritt b anfallende magnesiumsulfathaltige Konzentrat wird naßchemisch gereinigt, d.h., es wird ein reines Magnesiumsulfatheptahydrat kristallisiert, das sich vorzüglich zur Umsetzung zu Alkalisulfat eignet.

Das aus dem Verfahrensschritt (a) gewonnene Hauptmaterial enthält mindestens 92 % Magnesiumsulfat-Monohydrat. Dabei liegt die erzielbare Ausbeute bei einem Rohsalz mit 7 bis 10 % Magnesiumsulfat etwa bei 60 %.

Das aus dem Verfahrensschritt (a) stammende Restmaterial enthält noch $MgSO_4$, das bei dem bekannten Verfahren gemäß dem Stand der Technik als verloren anzusehen war. Durch die im Verfahrensschritt (b) angegebene Arbeitsweise kann das im Restmaterial enthaltene $MgSO_4$ zum großen Teil gewonnen werden, wenn das Restmaterial mit Zyklonstaub, der bei der elektrostatischen Trennung von Salzgemischen anfällt, vermischt wird und diese Mischung mit 0 bis 50 g Fettsäure C5 - C18 pro Tonne Restmaterial und bis zu 100 g/t Ammonacetat konditioniert und nach triboelektrischer Aufladung bei einer relativen Feuchte von 5 bis 10 % der umgebenden Luft elektrostatisch getrennt wird, wobei der Kieserit nahe der negativen Elektrode anfällt; gegebenenfalls kann also eine Zugabe von Fettsäure ganz entfallen.

Beim Verfahrensschritt (b) sind demzufolge nur relativ geringe Mengen an Konditionierungsmitteln notwendig, um das in dem Restmaterial enthaltenen $MgSO_4$ herauszuholen.

Es ist erfindungsgemäß des weiteren vorteilhaft, wenn dem Restmaterial gemäß dem Verfahrensschritt (b) außer Zyklonstaub auch noch gemahlenes Kalirohsalz zugesetzt wird, und zwar in einer Korngröße von etwa bis zu 1,5 mm.

Bevorzugt wird das magnesiumsulfathaltige Restmaterial gemäß Verfahrensschritt (b) mit 0,2 - 2,0 Gew.-Teilen Kalirohsalz und 0,1 - 0,4 Gew.-Teilen Zyklonstaub pro Gew.-Teil Restmaterial vermischt.

Bei dem Verfahrensschritt (b) können aus dem zugeführten Restmaterial ca. 90 - 95 % des darin enthaltenen $MgSO_4$ gewonnen werden. Gemäß dem Verfahrensschritt (b) erfolgt vorteilhaft die elektrostatische Trennung in einem Röhrenfreifallscheider, in dem ein elektrisches Feld von etwa 4 kV/cm aufrechterhalten wird.

Das aus dem Verfahrensschritt (b) anfallende magnesiumsulfathaltige Konzentrat, das im wesentlichen aus magnesiumsulfathaltigen Mineralien und restlichen Kieseriten besteht, enthält außer dem Magnesiumsulfatanteil noch Verunreinigungsanteile in Form von KCl, NaCl und $CaSO_4$. Auch dieser Magnesiumsulfatanteil kann rein dann noch gewonnen werden, wenn das Konzentrat naßchemisch behandelt wird. Der Magnesiumsulfatanteil und die Verunreinigungsanteile werden dabei in einer Löselauge gelöst, wobei die Verunreinigungsanteile mit Ausnahme von $CaSO_4$ in Lösung gehen. Eine evtl. noch vorhandene Restmenge an NaCl wird in kaltem Wasser weggelöst. Der so gewonnene Magnesiumsulfatanteil wird dann in heißem Wasser bzw. einer heißen $MgSO_4$-Lösung mit anschließender Kühlung zu $MgSO_4.7H_2O$ (Bittersalz) mit einer Reinheit von 99,9 % umkristallisiert.

Die im Verfahrensschritt (c) anfallende Abwassermenge ist denkbar gering und beträgt unter 0,5 $m^3$/t Endprodukt Magnesiumsulfatheptahydrat. Aus dem dem Verfahrensschritt (c) zugeführten magnesiumhaltigen Konzentrat werden durch diese Arbeitsweise etwa 95 % Magnesiumsulfat gewonnen.

Anhand des folgenden Beispiels soll die Erfindung weiter verdeutlicht werden. Einen detaillierten Überblick bietet das Fließschema.

Beispiel

100 t eines Hartsalzes der Zusammensetzung:
8,1 % magnesiumsulfathaltige Mineralien
11,2 % Sylvin
19,6 % Carnallit
1.5 % Anhydrit
59,6 % Steinsalz
werden gemahlen, worauf ein Abtrennen der Körner bei einer Korngröße von 1,6 mm erfolgt. Diese Rohsalzkörner von unter 1,6 mm werden einer elektrostatischen Trennung unterworfen, wobei 40 g/t Salizylsäure und 60 g/t Milchsäure als Konditionierungsmittel und eine Temperatur von 48°C und eine Luftfeuchte von 10 % zur Anwendung kommen.

Bei diesem elektrostatischen Trennverfahren fallen 40,5 t NaCl-Rückstand als Abfall an. An der anderen Elektrode erscheint als Hauptmaterial eine Kieserit-Kalifraktion. Diese Kieserit-Kalifraktion wird einer weiteren elektrostatischen Trennung unterworfen, wobei als Konditionierungsmittel Fettsäure C5 bis C18 in Mengen von 50 g/t zur Anwendung kommt und eine Temperatur von 62°C und eine Luftfeuchte von 5 % gewählt wird. Dabei fällt an der einen Elektrode Rohkieserit und an der anderen Elektrode Rohkali an.

Nun erfolgt eine Reinigung der Rohkieseritfraktion ebenfalls wieder mit Hilfe eines elektrostatischen Trennverfahrens unter Anwendung von 30 g/t Fettsäure und 60 g/t Ammonacetat als Konditionierungsmittel und einer Temperatur von 52°C und einer Luftfeuchte von 8 %. Dabei fällt hochprozentiger Kieserit mit 60 %iger Ausbeute an und ein Restmaterial.

Auch das angefallene Rohkali wird einer weiteren elektrostatischen Trennung unterworfen, wobei 14 g/t Salicylsäure und 35 g/t Fettsäure als Konditionierungsmittel und eine Temperatur von 53°C und eine Luftfeuchte von 7,5 % zur Anwendung kommen. Hierbei entstehen 18,7 t Kalikonzentrat und ein Restmaterial. Mit der Erzeugung von Reinkali und Reinkieserit endet der Verfahrensschritt (a).

Das aus der elektrostatischen Trennung des Rohkalis und des Rohkieserits anfallende Restmaterial wird gesammelt (35,8 t) und gemäß Verfahrensschritt (b) mit Zyklonstaub vermischt und diese Mischung einer elektrostatischen Trennung unterworfen, wobei als Konditionierungsmittel 70 g/t Ammonacetat und 5 g/t Fettsäure C5 - C18 und eine Temperatur von 52°C und eine relative Feuchte von 8 % zur Anwendung kommen. Hierbei entsteht ein magnesiumsulfathaltiges Konzentrat (2,5 t) geringerer Reinheit, das als Verunreinigungen noch 8 % NaCl, 4 % KCl und 2 % CaSO₄ enthält, wobei gemäß Verfahrensschritt c mit Hilfe einer Löselauge KCl und NaCl herausgelöst werden. Durch Anwendung von kaltem Wasser wird Rest-NaCl in Lösung gebracht, wodurch sich ein Abwasser in Höhe von 0,2 cbm/t ergibt.

Das nunmehr weitgehend chloridfreie MgSO₄-Konzentrat wird in einer zurückgeführten MgSO₄-Lösung bei 75°C aufgelöst, das Ungelöste (im wesentlichen Anhydrit) abgetrennt und die Lösung auf 25°C abgekühlt, wobei 3,2 t Magnesiumsulfatheptahydrat kristallisieren; die Mutterlauge wird zum erneuten Lösen zurückgeführt.

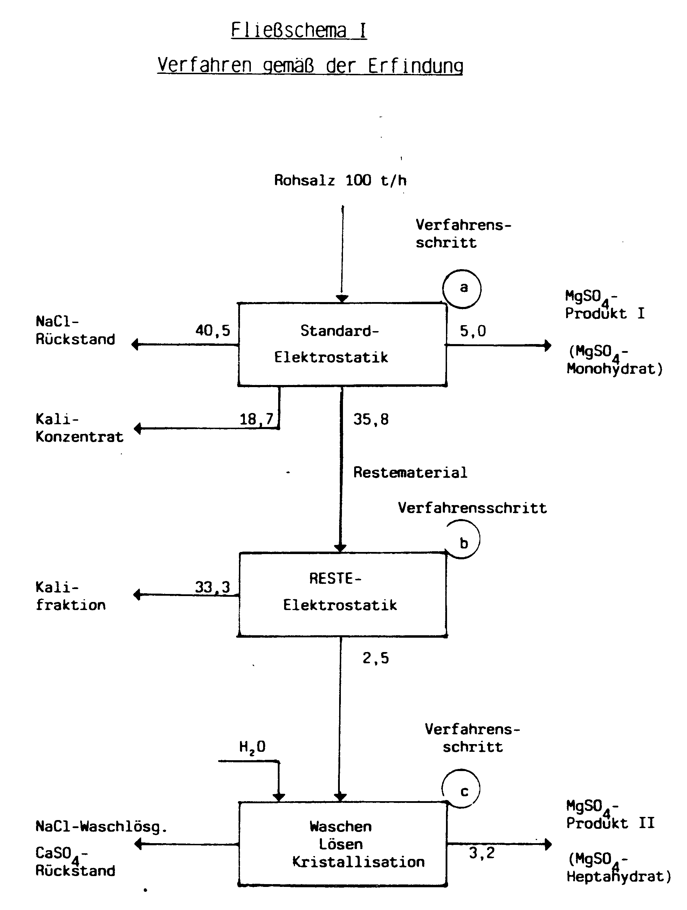

**Patentansprüche**

1. Verfahren zur Gewinnung von Magnesiumsulfaten aus Rohsalzgemischen, insbesondere aus Hartsalzen, wobei das Rohsalzgemisch unter Verwendung eines Konditionierungsmittels einer ersten elektrostatischen Behandlung unterworfen wird, bei der Natriumchlorid als Abfall anfällt, worauf das Hauptmaterial weiteren elektrostatischen Trennbehandlungen unterworfen und das trocken anfallende magnesiumsulfathaltige Konzentrat naßchemisch gereinigt wird, gekennzeichnet durch folgende Verfahrensschritte:
   a) das bei den weiteren elektrostatischen Trennbehandlungsstufen anfallende magnesiumsulfathaltige Restmaterial wird gesammelt,
   b) das gesammelte magnesiumsulfathaltige Restmaterial wird einer weiteren elektrostatischen Behandlung unter Mitverwendung des aus dem vorhergehenden Verfahrensschritt stammenden Konditionierungsmittels unterworfen, wobei ein magnesiumsulfathaltiges Konzentrat geringerer Reinheit anfällt.

2. Verfahren nach Anspruch 1, insbesondere zur Gewinnung von MgSO₄ aus dem Restmaterial gemäß Verfahrensschritt b), dadurch gekennzeichnet, daß das Restmaterial mit Zyklonstaub, der bei der elektrostatischen Trennung von Salzgemischen anfällt, vermischt wird und diese Mischung mit 0 bis 50 g Fettsäure C₅ - C₁₈ und bis zu 100 g/t Ammonacetat pro Tonne Restmaterial konditioniert und nach triboelektrischer Aufladung bei einer relativen Feuchte von 5 bis 10 % der umgebenden Luft elektrostatisch getrennt wird, wobei das MgSO₄ nahe der negativen Elektrode anfällt.

3. Verfahren nach Anspruch 2, dadurch gekennzeichnet, daß dem Restmaterial außer Zyklonstaub auch zerkleinertes Kalirohsalz zugesetzt wird.

4. Verfahren nach Anspruch 3, dadurch gekennzeichnet, daß das zuzusetzende Kalirohsalz bzw. der zuzusetzende Zyklonstaub eine Korngröße von 0,05 bis 1,5 mm aufweist.

5. Verfahren nach Anspruch 3, dadurch gekennzeichnet, daß das magnesiumsulfathaltige Restmaterial mit 0,2 bis 2,0 Gew.-Teilen zerkleinertem Kalirohsalz und 0,1 bis 0,4 Gew.-Teilen Zyklonstaub pro Gew.-Teil Restmaterial vermischt wird.

6. Verfahren nach Anspruch 1, dadurch gekennzeichnet, daß das aus dem Verfahrensschritt b) anfallende magnesiumsulfathaltige Konzentrat in an sich bekannter Weise in heißem Wasser gelöst und dann abgekühlt wird, wobei Magnesiumsulfatheptahydrat anfällt.

7. Verfahren nach Anspruch 6, dadurch gekennzeichnet, daß das gewonnene Magnesiumsulfatheptahydrat mit Alkalichlorid zu Alkalisulfat umgesetzt wird.

**Claims**

1. Process for preparing magnesium sulphates from crude salt mixtures, in particular from hard salt ore, wherein the crude salt mixture is subject to a first electrostatic treatment by use of a conditioning agent, where sodium chloride accumulates as waste, whereupon the main material is subject to a further electrostatic separation treatment, and the dry accumulated magnesium sulphate concentrate is further subject to a wet cleaning procedure, characterized by the following steps:
   a) the residual material containing magnesium sulphate accumulated by the further electrostatic separation treatment steps is collected,

b) the collected residual material containing magnesium sulphate is subject to a further electrostatic treatment by use of the conditioning agent from the preceding process step, whereby a concentration of low purity containing magnesium sulphate accumulates.

2. Process according to claim 1, especially for the recovery of $MgSO_4$ from the residual material according to process step b), characterized in that the residual material is mixed with cyclone dust, accumulated by the electrostatic separation of salt mixtures, this mixture being conditioned with 0 through 50 g fatty acid $C_5$-$C_{18}$ and up to 100 g/ton ammonium acetate per ton, and separated after triboelectrical charging in an atmosphere with a relative humidity of between 5 and 10 per cent, whereby the $MgSO_4$ accumulates near the negative electrode.

3. Process according to claim 2, characterized in that, besides the cyclone dust, crushed potash ore is added to the residual material.

4. Process according to claim 3, characterized in that the crude potash ore and the cyclone dust to be added have a grain size of between 0,05 and 1,5 mm.

5. Process according to claim 3, characterized in that the residual material containing magnesium sulphate is mixed with 0,2 through 2,0 parts by weight crushed potash ore and 0,1 through 0,4 parts by weight cyclone dust per part by weight of residual material.

6. Process according to claim 1, characterized in that the concentrate containing magnesium sulphate resulting from the process step b) is dissolved in a known way with hot water and cooled thereafter, whereby magnesium sulphate heptahydrate is generated.

7. Process according to claim 6, characterized in that the recovered magnesium sulphate heptahydrate is converted to alkali sulphate by introducing alkali chloride.

**Revendications**

1. Procédé de préparation de sulfates de magnésium à partir de mélanges de sel brut, en particulier de sels durs (Hartsalz), qui consiste à soumettre le mélange de sel à un premier traitement électrostatique en utilisant un agent de conditionnement, où le chlorure de sodium est produit comme déchet, après quoi le matériel principal est soumis à d'autres traitements de séparation électrostatiques et le concentré en teneur de sulfate de magnésium étant produit à sec est purifié chimiquement par voie humide, caractérisé par des séquences des opérations suivantes:

a) La matière restante en teneur de sulfate de magnésium étant produite dans des phases d'autres traitements de séparation électrostatiques est collectionnée,

b) la matiére restante en teneur de sulfate de magnésium, collectionnée est soumise à un traitement électrostatique ultérieure en utilisant l'agent de conditionnement sortant de la séquence des opérations précédentes, où un concentré en teneur de sulfate de magnésium d'une pureté inférieure est produit.

2. Procédé selon la revendication 1, en particulier pour l'extraction de $MgSO_4$ de la matière restante selon la phase opérationelle b), caractérisé par le fait que la matiére restante est mélangée avec la poussière de cyclone produite lors de la séparation électrostatique de mélanges de sel, et ce mélange est conditionné avec 0 à 50 g acide gras $C_5$-$C_{18}$ et jusqu'à 100 g/t ammonium acétate/t matière restante et séparée électrostatiquement après charge triboélectrique sous une humidité realtive de 5 à 10 % de l'air ambiante, en quoi le $MgSO_4$ est produit près de l'électrode négative.

3. Procédé suivant la revendication 2, caractérisé en ce qu'il est ajouté à la matière restante - en dehors de la poussière cyclone - aussi du sel brut de potasse broyé.

4. Procédé suivant la revendication 3, caractérisé en ce que le sel brut de potasse à ajouter ou bien la poussière cyclone à ajouter a une granulométrie de 0,05 à 1,5 mm.

5. Procédé suivant la revendication 3, caractérisé en ce que la matière restante en teneur de sulfate de magnésium est mélangée avec le sel brut de potasse broyé de 0,2 à 2,0 parts du poids et la poussiére de cyclone de 0,1 à 0,4 parts du poids.

6. Procédé suivant la revendication 1, caractérisé en ce que le concentré en teneur de sulfate de magnésium produit dans la phase opérationelle b) est dissous dans l'eau chaude de la manière habituelle, et puis refroidi, en quoi est produit le sulfate heptahydrate de magnésium.

7. Procédé suivant la revendication 6, caractérisé en ce que le sulfate heptahydrate de magnésium produit est transformé en sulfate d'alcali par moyen de chlorure d'alcali.

# Fließschema I

## Verfahren gemäß der Erfindung

Rohsalz 100 t/h

Verfahrensschritt

(a)

$MgSO_4$-
Produkt I

NaCl-
Rückstand    40,5    Standard-
Elektrostatik    5,0

($MgSO_4$-
Monohydrat)

Kali-
Konzentrat    18,7    35,8

Restematerial

Verfahrensschritt

(b)

Kalifraktion    33,3    RESTE-
Elektrostatik

2,5

Verfahrensschritt

$H_2O$

(c)

$MgSO_4$-
Produkt II

NaCl-Waschlösg.

$CaSO_4$-
Rückstand    Waschen
Lösen
Kristallisation    3,2

($MgSO_4$-
Heptahydrat)